# EUROPÄISCHE PATENTSCHRIFT

(11) **EP 1 362 268 B1**
(45) Veröffentlichungstag und Bekanntmachung des Hinweises auf die Patenterteilung: **09.03.2011**
(21) Anmeldenummer: 02716611.5
(22) Anmeldetag: 21.02.2002
(51) Int. Cl.: G05B 19/042

(54) **Funktionalitätsprüfung eines Aggregats einer Druckmaschine**
Functional check of a unit of a printing machine
Contrôle de fonctionnalité d'une unité de machine d'imprimerie

(30) Priorität: 21.02.2001 DE 10108233
(43) Veröffentlichungstag der Anmeldung: 19.11.2003
(73) Patentinhaber: Koenig & Bauer Aktiengesellschaft, 97080 Würzburg (DE)
(72) Erfinder: GABRIEL, Günther, Ewald, 97204 Höchberg (DE)
(74) Vertreter: Stiel, Jürgen
(86) Internationale Anmeldenummer: PCT/DE2002/000641
(87) Internationale Veröffentlichungsnummer: WO 2002/067064

(56) Entgegenhaltungen:
- DE-A- 3 100 451
- US-A- 5 588 109

## Beschreibung

Die Erfindung betrifft eine Funktionalitätsprüfung eines Aggregates einer Druckmaschine gemäß den Merkmalen des Anspruchs 1.

Gegenwärtig werden für die Funktionalitätsprüfung von derartigen Aggregaten wie insbesondere von Druckmaschinen oder von Teilen davon sogenannte Testleitstände eingesetzt, die es einer Bedienungsperson, als Abnehmer bezeichnet, ermöglichen, die einzelnen Funktionen des zu prüfenden Aggregats zu steuern und zu überprüfen, ob das Aggregat auf an dem Leitstand vorgenommene Einstellungen in der vorgesehenen Weise reagiert. Die für eine vollständige Funktionalitätsprüfung erforderlichen Einstellungen sind üblicherweise in einem Prüfprotokoll aufgelistet, in das der Abnehmer gegebenenfalls auch von dem Prüfstand gemeldete Reaktionen des Aggregats auf die vorgenommenen Einstellungen eintragen kann, um so das ordnungsgemäße oder nicht ordnungsgemäße Funktionieren des Aggregats zu dokumentieren. Diese Arbeitsweise ist langwierig, zeitaufwendig und mit Unsicherheiten behaftet, da niemals völlig auszuschließen ist, dass der Abnehmer Einstellungen fehlerhaft vornimmt, Ergebnisse fehlerhaft protokolliert oder Prüfschritte ausläßt.

Die DE 197 25 916 A1 beschreibt eine Diagnoseeinrichtung für elektrisch gesteuerte Systeme, bei denen an ein Diagnoseprogramm zusätzliche Bibliotheken angefügt werden. Ein automatischer Ablauf mehrerer Funktionen und Klartexteingabe sind nicht offenbart.

Die DE 195 22 937 C2 offenbart ein Diagnosesystem für ein Kraftfahrzeug mit einem "festen" Diagnoseprogramm. Eine Klartexteingabe ist nicht vorgesehen.

Durch die DE 36 02 171 A1 ist ein Testgerät für ein elektromedizinisches Gerät bekannt. Ein Datenbankanwahl zur Erstellung eines Prüfprogrammes ist nicht möglich.

Die US 5,588,109 offenbart ein Verfahren und eine Vorrichtung zur Ferndiagnose von beim Kunden befindlichen Aggregaten. Ein zu diagnostizierendes Aggregat ist aus einer vorgegebenen Menge auswählbar. Dem Aggregat sind Parameter zugeordnet, deren Messwerte durch die Vorrichtung über die Ferndiagnose ermittelt und auf einem Display angezeigt werden. In einem "Memofeld" können entweder Notizen gemacht oder weitere zu messende Parameter aus einer vorgegebenen Menge von Parametern ausgewählt und sichtbar gemacht werden. In einem Tool ist aus einer vorgegebenen Menge ein Testprogramm auszuwählen, welches eine festgelegte Abfolge von Schritten aufweist.

Der Erfindung liegt die Aufgabe zugrunde, eine Funktionalitätsprüfung eines Aggregates einer Druckmaschine zu schaffen.

Die Aufgabe wird erfindungsgemäß durch die Merkmale des Anspruchs 1 gelöst.

Die mit der Erfindung erzielbaren Vorteile bestehen insbesondere darin, dass sie bei geringem Zeit- und Arbeitsaufwand eine vollständige und korrekte Durchführung der Funktionalitätsprüfung gewährleistet. Da die Steuereinheit ein vollständiges Prüfprogramm empfängt, ist das versehentliche Auslassen einzelner Prüfschritte ausgeschlossen. Eine Zeitersparnis resultiert unter anderem daraus, dass die Steuereinheit einen ihr aus dem Prüfprogramm vorab bekannten Befehl sofort an das zu überprüfende Aggregat ausgeben kann, sobald der vorhergehende Überprüfungsschritt abgeschlossen ist, und nicht abgewartet werden muss, bis eine Bedienungsperson die zur Durchführung des nächsten Schritts erforderlichen Einstellungen vorgenommen hat.

Um ein vollständiges und zuverlässiges Protokoll über die Ergebnisse der einzelnen Überprüfungsschritte erzeugen zu können, ist es zweckmäßig, wenn die Steuereinheit eine dritte Schnittstelle zum Ausgeben von Rückmeidungsinformation aufweist, die sie von dem Aggregat als Antwort auf einen ausgegebenen Steuerbefehl empfängt. Die Gesamtheit der Rückmeldungsinformationen kann als ein Prüfprotokoll angesehen werden, anhand dessen zu einem beliebigen späteren Zeitpunkt die korrekte Durchführung der Funktionalitätsprüfung verifizierbar ist.

Um diese nachträgliche Überprüfung zu erleichtern, ist es zweckmäßig, wenn über diese dritte Schnittstelle nicht nur die Rückmeldungsinformationen ausgebbar sind, sondern darüber hinaus auch sämtliche über die erste Schnittstelle an das Aggregat ausgegebenen Steuerbefehle, die zu den jeweiligen Rückmeldungsinformationen geführt haben. Auf diese Weise kann später die Durchführung jedes einzelnen Schrittes des Prüfprogramms zweifelsfrei belegt werden.

Zur Erzeugung des Protokolls ist an die dritte Schnittstelle vorzugsweise ein Schreibgerät für einen nichtüberschreibbaren Datenträger angeschlossen. Dabei kann es sich in der einfachsten Ausgestaltung um einen Drucker handeln, um umfangreiche Protokolle platzsparend archivieren zu können, käme auch der Einsatz eines CD-Brenners in Frage.

Um es einem Anwender zu ermöglichen, den Ablauf des Prüfprogramms zu verfolgen, kann die Steuereinheit mit einem Anzeigeschirm zum Anzeigen von an das Aggregat ausgegebenen Steuerbefehlen, gegebenenfalls einschließlich von Parametern solcher Steuerbefehle ausgerüstet sein. Die Steuereinheit kann auf einfache Weise als Computer, insbesondere als preiswerter Arbeitsplatzrechner realisiert sein, der mit dem zu prüfenden Aggregat über einen Bus kommuniziert.

Um jegliche Verfälschung im Ablauf des Prüfprogramms durch einen Anwender zu vermeiden, kann vorgesehen werden, dass die Steuereinheit über keine Schnittstelle zum Eingeben von Steuerbefehlen durch einen Benutzer verfügt. Dies kann bei einer Steuereinheit in Form eines Arbeitsplatzrechners erreicht werden, wenn die Umsetzung des Prüfprogramms in von dem Aggregat ausführbare Befehle und die Ausgabe der Befehle unter der Kontrolle eines Steuerprogramms abläuft, das während der Abarbeitung des Prüfprogramms keine Anweisungen eines Benutzers entgegennimmt.

Es ist aber auch möglich, dem Benutzer in Maßen eine Einflussmöglichkeit auf die an das Aggregat gesendeten Steuerbefehle zu geben, insbesondere dann, wenn diese Steuerbefehle auch in das anzulegende Protokoll aufgenommen werden. Um dem Benutzer die Festlegung solcher Steuerbefehle bzw. ihrer Parameter zu erleichtern, kann ein Speicherelement zum Speichern von Eingabemasken vorgesehen werden, die jeweils Eingabefelder zum spezifizieren eines Steuerbefehls bzw. der Parameter eines vom Benutzer spezifizierten Steuerbefehls aufweisen.

Ein Ausführungsbeispiel der Erfindung ist in der Zeichnung dargestellt und wird im folgenden näher beschrieben.

Es zeigen:
- Fig.1: ein Blockdiagramm eines integrierten Systems zur Entwicklung eines Testprogramms und zu dessen Durchführung an einem zu testenden Aggregat;
- Fig. 2: ein Beispiel für die graphische Darstellung einer von dem Aggregat ausführbaren Anweisung;
- Fig. 3: eine graphische Darstellung der Schritte eines Prüfprogramms, die es einem Benutzer ermöglicht, die Abarbeitung des Prüfprogramms durch die erfindungsgemäße Vorrichtung zu verfolgen.

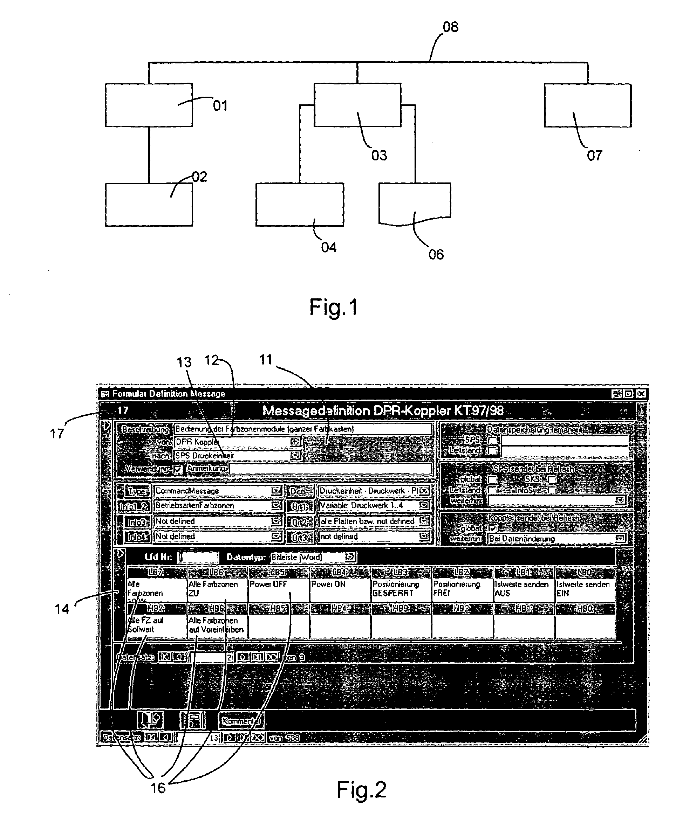

Das in Fig. 1 gezeigte Entwicklungs- und Prüfsystem umfasst einen ersten Computer, als Entwicklungscomputer 01 bezeichnet, der an eine Datenbank 02 angeschlossen ist, einen zweiten Computer, als Prüfcomputer 03 bezeichnet, der an einen Prüfprogrammspeicher 04 und einen Protokolldrucker 06 angeschlossen ist, sowie ein zu prüfendes Aggregat 07.

Bei dem zu prüfenden Aggregat 07 einer Druckmaschine kann es sich z. B. um eine Druckeinheit, einen Falzapparat, einen Rollenwechsler, ein Einzugswerk, eine Kühlgruppe, einen Trockner, einen Oberbau mit Leitwalzen und Wendestangen, einen Bogenanleger, einen Bogenausleger, eine Bogentransporteinrichtung, eine Wendeeinrichtung etc. oder eine Komponente eines Aggregats wie etwa ein Farbwerk, Feuchtwerk etc., handeln.

Entwicklungscomputer 01, Prüfcomputer 03 und Aggregat 07 sind jeweils mit geeigneten Schnittstellen ausgestattet, um miteinander über einen gemeinsamen Bus 08 zu kommunizieren. Der Bus 08 ist vom gleichen Typ wie der, über den das Aggregat 07 - sofern es sich um ein Teil einer Druckmaschine handelt - in einer fertigen Druckmaschine mit deren anderen Komponenten kommunizieren wird, um z. B. Steuerbefehle von einer zentralen Steuereinheit zu empfangen und Rückmeldungen über den Vollzug eines Steuerbefehls, einen eingestellten Parameter etc. an die Steuereinheit oder andere Komponenten zu liefern.

Die Datenbank 02 enthält einen Datensatz, dessen Elemente jeweils einem der Steuerbefehle entsprechen, die das Aggregat 07 oder eine andere Komponente der Druckmaschine zu verarbeiten in der Lage ist.

Ein Programmierer, der ein Prüfprogramm für ein gegebenes Aggregat erstellt, wählt der Reihe nach Elemente des Datensatzes aus, die nacheinander auszuführende Steuerbefehle des Prüfprogramms bilden sollen.

Jedes Element umfasst eine Mehrzahl von Datenfeldern sowie Information, die die Art und Weise der Darstellung der einzelnen Datenfelder auf einem Anzeigeschirm des Entwicklungscomputers 01 festlegt. Ein Beispiel für eine solche Darstellung, die dem Programmierer nach der Auswahl eines Elements angezeigt wird, ist in Fig. 2 gezeigt. Jedem der Elemente ist eine laufende Nummer, in diesem Beispiel die Nummer 17, zugeordnet. In einem Teilfenster 11 sind eine Bezeichnung des Befehls in Textform, hier "Bedienung der Farbzonenmodule", die Bezeichnung 12 einer Komponente der Druckmaschine, die als Absender der Meldung in Frage kommt, und die Bezeichnung 13 eines Empfängers des Steuerbefehls angegeben. Denkbar ist auch, die Steuerbefehle als graphische Symbole darzustellen.

Je nach Bedeutung eines Steuerbefehls können diesem diverse Parameter zugeordnet sein, die diverse Werte annehmen können. Ein zweites Teilfenster 14 ist in eine Mehrzahl von Feldern 16 unterteilt, die jeweils einem dieser Parameter zugeordnet sind und eine Angabe über dessen Bedeutung enthalten und vom Programmierer mit einem ausgewählten Wert des Parameters beschreibbar sind. Bei dem hier dargestellten Beispiel eines Befehls zur Steuerung der Farbzonenmodule eines Farbwerks sind insgesamt 10 Parameter von jeweils 1 Bit Breite definiert, die jeweils Werte 0 oder 1 bzw. gesetzt oder nicht gesetzt annehmen können. Die Parameter verteilen sich hier auf Bits LB0 - LB7und HB6 - HB7 von zwei Bytes. Dabei ist einer Betriebseigenschaft des zu prüfenden Aggregats, die n Werte annehmen kann, jeweils eine Gruppe von n Parametern zugeordnet.

So dienen z. B. die Bits LB0, LB1 zum Aktivieren bzw. Deaktivieren eines Testmodus des Farbzonenmoduls, wobei der Testmodus sich dadurch auszeichnet, dass das Modul zyklisch eine Mehrzahl von internen Meßgrößen wie etwa Temperatur, Potentiometerspannungen, etc. sendet, was im Normalbetrieb des Moduls nicht der Fall ist. Bits LB2, LB3 dienen zum Freigeben bzw. Sperren der Bewegung von Stellgliedern aller Farbzonen des Moduls. Die Bits LB4 bzw. LB5 dienen zum Hin- und Herschalten des Farbzonenmoduls zwischen einem Normalbetriebszustand und einem Wartezustand. Durch Senden eines Befehls "Bedienung der Farbzonenmodule" mit gesetztem Bit LB5 ist das Modul in den Wartezustand schaltbar, in dem an es gerichtete Steuerbefehle mit Ausnahme des inversen Befehls "Bedienung der Farbzonenmodule" mit gesetztem Bit LB4, nicht ausgewertet werden.

Für die Farbzonen des Moduls sind hier n=4 verschiedene Zustände definiert, denen jeweils ein Parameterbit zugeordnet ist: Alle Farbzonen 100% offen (LB7), alle Farbzonen geschlossen (LB6), Einstellen aller Farbzonen auf einen mit einem vorhergehenden Steuerbefehl festgelegten Sollwert (HB7) und alle Farbzonen auf Voreinfärben (HB6). Von den Parameterbits, die zu einer Gruppe von alternativen Parameterwerten gehören, wie etwa LB6, LB7, HB6, HB7 ist jeweils nur eines selektierbar.

Wenn von den Parametern einer Gruppe keiner gesetzt wird, so bleibt bei Ausführung des Steuerbefehls durch das Modul die durch diese Parameter beeinflußbare Eigenschaft des Moduls unverändert. Um z. B. mit einem einzigen Steuerbefehl das Farbzonenmodul zur Verarbeitung von Steuerbefehlen bereit zu machen, die Positionierung der Stellglieder freizugeben und alle Farbzonen auf den Sollwert einzustellen, kann ein Programmierer daher in dem Teilfenster 14 die Felder LB4, LB2, HB7 anwählen, woraufhin der Entwicklungscomputer 01 einen Prüfprogrammschritt mit dem Steuerbefehl "Bedienung der Farbzonenmodule" und einem zugeordneten 16-Bit-Parameterwort mit dem Wert hexadezimal 8014 bzw. binär 1000 0000 0001 0100 erzeugt.

Die Festlegung anderer Steuerbefehle des Prüfprogramms, auch für andere Komponenten einer zu testenden Druckmaschine, kann in gleicher Weise wie oben dargelegt erfolgen.

Ein in dieser Weise als Abfolge von Steuerbefehlen erstelltes Prüfprogramm kann nun über den Bus 08 in den Prüfprogrammspeicher 04 des Prüfcomputers 03 übertragen werden.

Dabei kann das Prüfprogramm die Form einer Datei haben, die nichts weiter als die Zusammenstellung der von dem Prüfcomputer 03 an das zu testende Aggregat 07 auszugebenden Steuerbefehle und ihrer Parameter sowie ggf. von Hilfsinformation, auf deren Funktion an späterer Stelle noch eingegangen wird, umfasst. Die Umsetzung dieser Datei in an das Aggregat gesendete Steuerbefehle wird von einem Systemprogramm des Prüfcomputers 03 durchgeführt.

Generell kann das Prüfprogramm auch die Form eines vom Prüfcomputer 03 unmittelbar ausführbaren Programms zum Ausgeben der festgelegten Steuerbefehle haben. In der weiteren Beschreibung wird jedoch vom erstgenannten Fall ausgegangen, dass das Prüfprogramm im wesentlichen nur die für das Aggregat bestimmten Steuerbefehle umfasst und unter der Kontrolle eines Systemprogramms das Prüfcomputers 03 abläuft.

Nachdem das Prüfprogramm in den Speicher 04 übertragen worden ist, wird für die weitere Prüfung des Aggregats 07 der Entwicklungscomputer 01 nicht mehr benötigt. Entwicklungscomputer 01 und zu prüfendes Aggregat 07 kommunizieren nicht direkt über den Bus 08 miteinander. Es ist daher möglich und zweckmäßig, dass der Prüfcomputer 03 zu einem ersten Zeitpunkt lediglich mit dem Entwicklungscomputer 01 verbunden ist, um das Prüfprogramm in den Speicher 04 zu überspielen, und zu einem späteren Zeitpunkt über einen Bus 08 vom gleichen Typ an das zu prüfende Aggregat 07 angeschlossen wird. Bei dem Prüfcomputer 03 kann es sich zweckmäßigerweise um einen transportablen Computer wie etwa ein Laptop handeln, so dass das Prüfprogramm in einem ersten Netzwerk mit Bus 08 in den Speicher 04 überspielt werden kann und die tatsächliche Prüfung des Aggregats 07 an einem beliebigen anderen Ort in einem zweiten Netzwerk mit Bus 08 vorgenommen werden kann.

Selbstverständlich kann das Prüfprogramm auch auf eine beliebige andere Weise in den Speicher 04 übertragen werden, z. B. durch Beschreiben eines Datenträgers am Entwicklungscomputer 01 mit dem Prüfprogramm und Lesen des Datenträgers am Prüfcomputer 03. Denkbar ist auch, dass es sich beim Entwicklungscomputer 01 und dem Prüfcomputer 03 um das gleiche Gerät handelt, das lediglich zu verschiedenen Zeit verschiedene Programme ausführt.

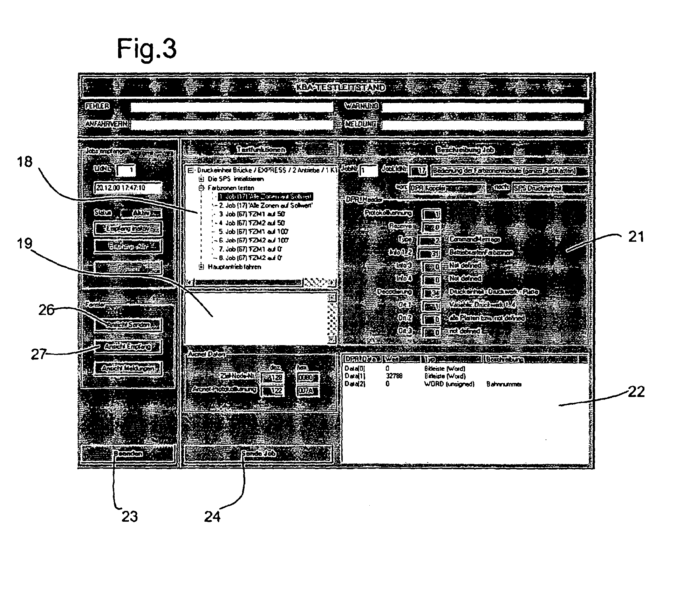

Fig. 3 zeigt den Aufbau eines Bildes, das auf einem (nicht dargestellten) Anzeigeschirm des Prüfcomputers 03 bei der Abarbeitung des in den Speicher 04 übernommenen Prüfprogramms erscheint. Das Prüfprogramm ist in eine Mehrzahl von Abschnitten untergliedert, denen jeweils Titel wie hier "SPS initialisieren", "Farbzonen testen", "Hauptantrieb fahren" zugeordnet sind, die in dem Teilfenster 18 in einer Baumstruktur angeordnet sind. Diese Titel sowie Information über ihre hierarchische Gliederung, die zum Erzeugen der Baumstruktur benötigt wird, sind in der oben erwähnten Hilfsinformation enthalten.

Zu dem in der Fig.3 dargestellten Zeitpunkt der Ausführung des Prüfprogramms ist der Prüfcomputer 03 dabei, den Programmabschnitt "Farbzonen testen" auszuführen, weswegen in dem Teilfenster 18 die einzelnen Steuerbefehle oder "Jobs" aufgelistet sind, aus denen sich das Teilprogramm zusammensetzt. Von gegenwärtig nicht ausgeführten Programmabschnitten wie "SPS initialisieren" und "Hauptantrieb fahren" sind lediglich die Titel dargestellt. Der gegenwärtig in Ausführung befindliche Steuerbefehl ist invertiert dargestellt.

Ein Teilfenster 19 kann genutzt werden, um darin Kommentare oder Anweisungen in Textform, die ebenfalls in der Hilfsinformation enthalten sein können, synchronisiert mit dem Ablauf des Prüfprogramms einem Anwender des Prüfprogramms anzuzeigen. Ein weiteres Teilfenster 21 zeigt in einer Mehrzahl von betitelten Feldern eine Folge von Zahlenwerten, die, in festgelegter Reihenfolge auf dem Bus 08 an das Aggregat 07 übertragen, den im Fenster 18 invertiert dargestellten Steuerbefehl bilden. Parameter des Steuerbefehls, hier z. B. der Dezimalwert 32788, der dem oben erwähnten Beispiel hexadezimal 8014 entspricht, sind in einem Teilfenster 22 dargestellt. Ein Anwender, der den Prüfcomputer 03 das Steuerprogramm durchführen läßt, kann sich somit anhand der in Fig. 3 gezeigten Anzeige einen vollständigen Überblick über den Ablauf des Prüfprogramms verschaffen.

Der Anwender hat über eine Mehrzahl von in der Anzeige dargestellten Buttons 23; 24; 26; 27 die Möglichkeit, den Lauf des Prüfprogramms abzubrechen (Button 23), das Senden eines Steuerbefehls an das Aggregat 07 von Hand auszulösen (Button 24) oder die Anzeige von dem in der Fig. 3 gezeigten Zustand, in dem die gesendeten Befehle angezeigt werden, in einen Zustand des Anzeigens von vom Aggregat 07 empfangenen Rückmeldungen und zurück umzuschalten (Buttons 26, 27). Ein Hinzufügen oder Weglassen von Steuerbefehlen oder ein Manipulieren ihrer Parameter ist nicht vorgesehen.

Rückmeldungen, die der Prüfcomputer 03 vom Aggregat 07 als Antwort auf einen ausgesendeten Steuerbefehl empfängt, werden von dem Systemprogramm in der Reihenfolge ihres Eintreffens auf einen Protokolldrucker 06 ausgegeben. Anhand dieses Prüfprogramms ist in Kenntnis des ausgeführten Steuerprogramms zu einem späteren Zeitpunkt leicht und sicher nachweisbar, dass die Funktionalitätsprüfung mit allen erforderlichen Schritten und korrekten Parametern stattgefunden hat und welche Ergebnisse sie geliefert hat.

Um eine solche Nachprüfung noch leichter nachvollziehbar zu machen, kann vorgesehen werden, dass auf den Protokolldrucker 06 nicht nur die vom Aggregat 07 gelieferten * Rückmeldungsinformationen ausgegeben werden, sondern auch die vom Prüfcomputer 03 an das Aggregat 07 gesendeten Steuerbefehle, die die protokollierten Rückmeldungen hervorgerufen haben.

Wenn das Systemprogramm die an das Aggregat 07 gesendeten Steuerbefehle komplett auf dem Drucker 06 protokolliert, so kann auch bei diesem Systemprogramm eine Möglichkeit vorgesehen werden, dass eine Maske der in Fig. 2 gezeigten Art auf dem Prüfcomputer 03 angezeigt wird und ein Anwender so die Möglichkeit erhält, Prüfbefehle zusätzlich einzufügen oder die Parameter von Prüfbefehlen zu verändern, wenn die vom Prüfprogramm gelieferten Ergebnisse dies wünschenswert erscheinen lassen. Da auch diese zusätzlichen oder veränderten Befehle und die in Reaktion darauf vom zu prüfenden Aggregat 07 gelieferten Rückmeldungen vom Drucker 06 protokolliert werden, ist die Nachvollziehbarkeit des Prüfvorgangs und die Möglichkeit, seine richtige und vollständige Durchführung zu dokumentieren, gewährleistet.

Selbstverständlich kann anstelle des Druckers ein beliebiges anderes Datenaufzeichnungsgerät eingesetzt werden, mit dem eine gegen nachträgliche Verfälschung gesicherte Aufzeichnung des Ablaufs des Prüfprogramms angelegt werden kann. So kann z. B. ein CD-Brenner zum Aufzeichnen des Protokolls auf einer nur einmal beschreibbaren CD-ROM eingesetzt werden. Denkbar ist auch eine Aufzeichnung auf einem beliebigen, an sich überschreibbaren Datenträger, z. B. einem beliebigen magnetischen Datenträger, die programmtechnisch, z. B. durch eine so genannte digitale Signatur, gegen nachträgliche Verfälschung abgesichert wird.

Die Funkionalitätsprüfung einer Druckeinheit umfasst beispielsweise folgende Schritte: An- und Abstellung, Antriebe von Farbwalzen, Farbduktor, Farbheber, Feuchtwerk, Feuchtduktor, Antriebe der Zylinder, Umfangs-, Diagonal- und Axialregister der Walzen, Verschlüsse von Aufzüge der Zylinder, Druck-An und Druck-Ab der Zylinder, Waschfunktion von Farbwerk und Zylindern, Feuchwasserniveaukontrolle, Druckplatten zufügen.

### Bezugszeichenliste

- 01: Entwicklungscomputer
- 02: Datenbank
- 03: Prüfcomputer, Steuereinheit
- 04: Prüfprogrammspeicher
- 05: -
- 06: Protokolldrucker
- 07: Aggregat
- 08: Bus
- 09: -
- 10: Teilfenster
- 11: Bezeichnung
- 12: Bezeichnung
- 13: Teilfenster
- 14: -
- 15: Feld
- 16: laufende Nummer
- 17: Teilfenster
- 18: Teilfenster
- 19: -
- 20: Teilfenster
- 21: Teilfenster
- 22: Button
- 23: Button
- 24: -
- 25: Button
- 26: Button

## Patentansprüche

1. Funktionalitätsprüfung eines Aggregats (07) einer Druckmaschine mit folgenden Schritten:
- Erstellen eines Prüfprogramms mittels eines vom Prüfprogramm verschiedenen Programmes durch Auswahl und Speichern von Steuerbefehlen aus einer Vielzahl in einer Datenbank (02) gespeicherten Steuerbefehlen in Abhängigkeit des zu prüfenden Aggregates (07);
- Übertragung des Prüfprogramms, das eine Mehrzahl von Steuerbefehlen und deren Abfolge definiert, in einen Prüfprogrammspeicher der Steuereinheit (03);
- Ausgeben der Steuerbefehle an das Aggregat (07) in der definierten Abfolge;
- Übertragen aller Steuerbefehle des Prüfprogrammes über einen Bus (08), wobei der Typ des Busses gleich dem Typ des Busses ist, mit dem das Aggregat (07) in der fertigen Druckmaschine mit anderen Komponenten kommuniziert;
- Empfangen und Anzeigen von Rückmeldungsinformationen vom Aggregat (07).

2. Funktionalitätsprüfung nach Anspruch 1, **dadurch gekennzeichnet, dass** eine Aufzeichnung aller vom Aggregat (07) empfangenen Rückmeldungsinformationen angelegt und ausgegeben wird.

3. Funktionalitätsprüfung nach Anspruch 2, **dadurch gekennzeichnet, dass** alle an das Aggregat (07) gesendeten Steuerbefehle in die Aufzeichnung aufgenommen werden.

4. Funktionalitätsprüfung nach Anspruch 1, **dadurch gekennzeichnet, dass** die Steuerbefehle in Textform oder als graphische Symbole dargestellt werden.

5. Funktionalitätsprüfung nach Anspruch 1, **dadurch gekennzeichnet, dass** bei Ausführung des Prüfprogramms die Steuerbefehle dargestellt werden.

6. Funktionalitätsprüfung nach Anspruch 1, **dadurch gekennzeichnet, dass** alle Steuerbefehle des Prüfprogrammes über einen Bus (08) an das Aggregat (07) übertragen werden.

7. Funktionalitätsprüfung nach Anspruch 1, **dadurch gekennzeichnet, dass** das Prüfprogramm im wesentlichen nur die für das Aggregat (07) bestimmte Steuerbefehle umfasst.

8. Funktionalitätsprüfung nach Anspruch 1, **dadurch gekennzeichnet, dass** die Funktionen An- und Abstellen von Farbwalzen oder An- und Abstellen von Farbduktoren oder An- und Abstellen von Farbheber oder An- und Abstellen von Feuchtwalzen oder An- und Abstellen von Feuchtduktoren oder Antriebe von Farbwalzen oder Antriebe von Farbduktoren oder Antriebe von Farbheber oder Antriebe von Feuchtwalzen oder Antriebe von Feuchtduktoren oder Antriebe von Zylinder oder Antriebe von Umfangsregister von Zylinder oder Antriebe von Diagonalregister von Zylinder oder Antriebe von Axialregister von Zylinder oder Verschlüsse von Aufzüge der Zylinder oder Druck- An der Zylinder oder Druck-Ab der Zylinder oder Feuchtwasserkontrolle oder Druckplatten zufügen, geprüft werden.

## Claims

1. Functionality check of a unit (07) of a printing press having the following steps:
- production of a checking program by means of a program which is different from the checking program by selection and storage of control commands from a multiplicity of control commands stored in a data bank (02) as a function of the unit (07) to be checked;
- transfer of the checking program which defines a plurality of control commands and their sequence into a checking-program memory of the control unit (03);
- outputting of the control commands to the unit (07) in the defined sequence;
- transfer of all the control commands of the checking program via a bus (08), the type of bus being the same as the type of that bus, by way of which the unit (07) communicates with other components in the finished printing press;
- receiving and displaying of feedback information from the unit (07).

2. Functionality check according to Claim 1, **characterized in that** a recording of all the feedback information received from the unit (07) is established and output.

3. Functionality check according to Claim 2, **characterized in that** all the control commands which are sent to the unit (07) are recorded in the recording.

4. Functionality check according to Claim 1, **characterized in that** the control commands are represented in text form or as graphic symbols.

5. Functionality check according to Claim 1, **characterized in that** the control commands are represented when the checking program is executed.

6. Functionality check according to Claim 1, **characterized in that** all the control commands of the checking program are transferred to the unit (07) via a bus (08).

7. Functionality check according to Claim 1, **characterized in that** the checking program comprises substantially only the control commands which are intended for the unit (07).

8. Functionality check according to Claim 1, **characterized in that** the functions of throwing on and off of inking rolls or throwing on and off of ink doctors or throwing on and off of ink ductors or throwing on and off of dampening-solution rolls or throwing on and off of dampening-solution duct rollers or drives of inking rolls or drives of ink duct rollers or drives of ink take-up roller or drives of dampening-solution rolls or drives of dampening-solution duct rollers or drives of cylinders or drives of circumferential registers of cylinders or drives of diagonal registers of cylinders or drives of axial registers of cylinders or closures of covers of the cylinders or throwing on of the cylinders or throwing off of the cylinders or dampening-water control or the addition of printing plates are checked.

## Revendications

1. Contrôle de fonctionnalité d'une unité (07) d'une machine à imprimer, présentant les étapes suivantes :
- élaboration d'un programme de test, au moyen d'un programme différent du programme de test, par sélection et stockage en mémoire d'ordres de commande à partir d'une pluralité d'ordres de commande stockés dans une banque de données (02), en fonction de l'unité (07) à tester ;
- transmission du programme de test, définissant une pluralité d'ordres de commande et leur ordre de succession, dans une mémoire à programme de test de l'unité de commande (03) ;
- émission des ordres de commande à l'unité (07) dans l'ordre de succession défini ;
- transmission de tous les ordres de commande du programme de test, par l'intermédiaire d'un bus (08), le type de bus étant identique au type de bus avec lequel l'unité (07) communique avec d'autres composants lorsque la machine à imprimer est achevée ;
- réception et affichage d'informations en retour provenant de l'unité (07).

2. Contrôle de fonctionnalité selon la revendication 1, **caractérisé en ce qu'**un enregistrement de toutes les informations en retour, reçues de l'unité (07), est effectué et édité.

3. Contrôle de fonctionnalité selon la revendication 2, **caractérisé en ce que** tous les ordres de commande envoyés à l'unité (07) sont intégrés dans l'enregistrement.

4. Contrôle de fonctionnalité selon la revendication 1, **caractérisé en ce que** les ordres de commande sont présentés sous forme de texte ou sous forme de symboles graphiques.

5. Contrôle de fonctionnalité selon la revendication 1, **caractérisé en ce que** les ordres de commande sont présentés lors de l'exécution du programme de test.

6. Contrôle de fonctionnalité selon la revendication 1, **caractérisé en ce que** tous les ordres de commande du programme de test sont transmis à l'unité (07) par un bus (08).

7. Contrôle de fonctionnalité selon la revendication 1, **caractérisé en ce que** le programme de test comprend essentiellement uniquement les ordres de commande déterminés pour l'unité (07).

8. Contrôle de fonctionnalité selon la revendication 1, **caractérisé en ce que** les fonctions de mise en marche et de mise à l'arrêt de rouleaux encreurs, ou de mise en marche et de mise à l'arrêt de ducteurs d'encrage, ou de mise en marche et de mise à l'arrêt de preneurs d'encre, ou de mise en marche et de mise à l'arrêt de rouleaux mouilleurs ou de mise en marche et de mise à l'arrêt de ducteurs de mouillage ou d'entraînements de rouleaux encreurs ou d'entraînements de ducteurs d'encrage, ou d'entraînements de preneurs d'encre, ou d'entraînements de rouleaux mouilleurs, ou d'entraînements de ducteurs de mouillage, ou d'entraînements de cylindres, ou d'entraînements de repérage périphérique de cylindre, ou d'entraînements de repérage diagonal de cylindre, ou d'entraînements de repérage axial de cylindre, ou de fermetures d'habillages des cylindres ou d'application des cylindres ou de dégagement des cylindres ou contrôle de l'eau de mouillage ou d'approvisionnement des plaques d'impression, sont testées.
